# EUROPEAN PATENT SPECIFICATION

(11) **EP 1 998 526 B1**
(45) Date of publication and mention of the grant of the patent: **18.09.2013**
(21) Application number: 07711014.6
(22) Date of filing: 26.02.2007
(51) Int. Cl.: H04W 4/12

(54) **METHOD AND APPARATUS FOR MESSAGE ROUTING BASED ON IP**
VERFAHREN UND VORRICHTUNG ZUM ROUTEN VON NACHRICHTEN AUF DER BASIS VON IP
PROCÉDÉ ET APPAREIL POUR L'ACHEMINEMENT DE MESSAGES BASÉ SUR IP

(30) Priority: 02.03.2006 CN 200610008000
(43) Date of publication of application: 03.12.2008
(73) Proprietor: Huawei Technologies Co., Ltd., Longgang District, Shenzhen Guangdong 518129 (CN)
(72) Inventor: DUAN, Xiaoqin Huawei Technologies Co., Ltd., Shenzhen 518129 (CN); SUN, Chengzhen Huawei Technologies Co., Ltd., Shenzhen 518129 (CN)
(74) Representative: Kreuz, Georg Maria
(86) International application number: PCT/CN2007/000611
(87) International publication number: WO 2007/098685

(56) References cited:
- WO-A-2005/036902
- WO-A2-2004/075507
- CN-A- 1 348 667
- CN-A- 1 351 801
- HUAWEI, NOKIA, QUALCOMM: "Configuration of the IP-SM-GW in the HSS, Clarification for subscriber data in TS 23.204, Correction on SMS MT delivery procedure, Successful MT Delivery Procedure in SMS-IP Architecture, S2-071066" 3GPP SA WG2 ARCHITECTURE S2-56B, [Online] 12 February 2007 (2007-02-12), - 15 February 2007 (2007-02-15) pages 1-9, XP002512951 Retrieved from the Internet: URL:http://www.3gpp.org/ftp/tsg_sa/WG2_Arc h/TSGS2_56b-AH-St_Louis/Docs/S2-071066.zip > [retrieved on 2009-01-29]
- "Universal Mobile Telecommunications System (UMTS); Support of Short Message Service (SMS) over generic 3GPP Internet Protocol (IP) access; Stage 2 (3GPP TS 23.204 version 7.1.0 Release 7)" ETSI STANDARDS, LIS, SOPHIA ANTIPOLIS CEDEX, FRANCE, [Online] vol. 3-SA2, no. V7.1.0, December 2006 (2006-12), pages 1-16, XP002512952 Retrieved from the Internet: URL:http://www.3gpp.org/ftp/Specs/archive/ 23_series/23.204/23204-710.zip> [retrieved on 2009-02-02]
- "Universal Mobile Telecommunications System (UMTS); Support of SMS and MMS over generic 3GPP IP access; (3GPP TS 23.804 version 7.1.0 Release 7)" ETSI STANDARDS, LIS, SOPHIA ANTIPOLIS CEDEX, FRANCE, [Online] vol. 3-SA2, no. V7.1.0, September 2005 (2005-09), pages 1-25, XP002512953 Retrieved from the Internet: URL:http://www.3gpp.org/ftp/Specs/archive/ 23_series/23.804/23804-710.zip> [retrieved on 2009-02-02]

## Description

### Field of the Invention

The present invention relates to the technical field of network communications, in particular, to an IP-based message routing method, system and apparatus.

### Background of the Invention

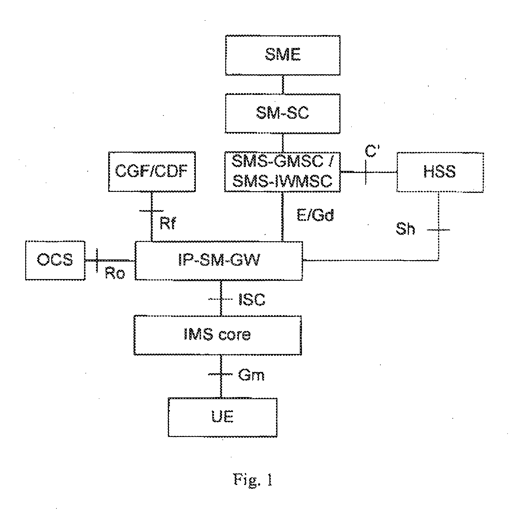

The structure of an existing network for interworking between an IP Multimedia Subsystem (IMS)-based message service and the traditional short message service is shown in Figure 1.

The network structure shown in Figure 1 includes a Short Message Entity (SME), a Short Message Service Center (SM-SC), a Short Message Service Gateway Mobile Switching Center/Short Message Service Interworking Mobile Switching Center (SMS-GMSC/SMS-IWMSC), a Home Subscriber Server/Home Location Register (HSS/HLR), a Charging Gateway Function/Charging Data Function (CGF/CDF) and an Online Charging System (OCS), which are functional entities for realizing the Short Message Service (SMS) in the current mobile network.

The SM-SC is used to store a short message. The SMS-GMSC is a traditional message routing entity, and is used to query routing information from an HSS/HLR when receiving a short message from a mobile subscriber; The SMS-IWMSC is used to check whether a mobile subscriber in a roaming state is allowed to send a short message to the home SM-SC of the mobile subscriber. Short message centers employed in the current mobile network are all network devices integrated with an SM-SC, an SMS-GMSC and an SMS-IWMSC, and these three functional entities are not implemented as separate physical devices. Therefore, in the following description, a short message center refers to a network device integrated with an SM-SC, an SMS-GMSC and an SMS-IWMSC.

The HSS/HLR is used to store data information, including routing information, of a mobile subscriber. The CGF/CDF is used to collect and process offline charging bill information of a mobile subscriber, and then to deliver it to a charging center. The OCS is used to collect and process online charging bill information of a mobile subscriber, and then to deliver it to the charging center.

The IP-Short Message-Gateway (IP-SM-GW) in Figure 1 is a newly added network entity, which realizes the communication between an IP User Equipment (UE) and the SMS-GMSC/SMS-IWMSC by enabling interworking between a message protocol of IP network and the existing short message protocol of WCDMA/GSM network.

IMS core includes core logic entities in the IP Multimedia Subsystem network: a Service-Call State Control Function (S-CSCF), a Proxy-CSCF (P-CSCF) and an Interrogating-CSCF (I-CSCF). The IMS core provides a reliable connection between a UE and the IP-SM-GW. To utilize the a message service, a Session Initiation Protocol (SIP)-based UE registers with an IMS network, and then register with the IP-SM-GW via a third party registration initiated to the IP-SM-GW by the IMS; the IP-SM-GW notifies the HSS of the registration of the UE and the address of the IP-SM-GW; the HSS stores the state of the IP subscriber as 'IP Connected', and stores the address of the IP subscriber and the address of the IP-SM-GW with which the IP subscriber is registered.

In the existing technical solution, after a called UE registers with an IP-SM-GW, if the UE in the IMS network domain needs to implement an SMS-Mobile Terminated (SMS-MT) process, the SMS-GMSC needs to exchange information with the IP-SM-GW. In other words, the SMS-GMSC needs to receive and process the address of the network entity IP-SM-GW.

In the existing network, the SMS-GMSC can at most receive and process the addresses of two network entities including a Mobile Switching Center (MSC) and a Serving GPRS Support Node (SGSN). According to the requirements of the prior art, to implement the interworking between an IMS-based message service and the traditional short message service, the SMS-GMSC should be capable of receiving and processing addresses of three network entities including the IP-SM-GW, the MSC and the SGSN; moreover, the S-CSCF needs to carry an identifier indicating support of IP message in a routing information request it sends to the HLR/HSS. Thus, the traditional short message network entity, SMS-GMSC, needs to be modified. Such modification will increase the cost for implementing the IP-based message service, which is not desired by the operator.

WO2005036902 discloses a short message service system wherein a GMSC performs a MAP request to a home location database as defined in 3GPP TS 29.002. The request is for information to determine the address of an MSC or SGSN to which to route a short message. In order to support delivery of SMS messages to an IP client address of the mobile, the home location database is arranged to return the address of an IP/SMS gateway for the mobile user equipment which is attached to an IP network.

### Summary of the Invention

Embodiments of the invention provide an IP-based message routing method, system and apparatus, so that modifications to the traditional message routing entity are avoided, and IP-based message service is implemented in a low cost,

According to an embodiment of the invention, an IP-based message routing method includes: forwarding to a message routing entity, by a called-side HSS/HLR, information indicating to forward a message to an IP-SM-GW of a called subscriber; forwarding, by the message routing entity, a message received to the IP-SM-GW of the called subscriber, according to the indication information; and requesting the HSS/HLR for routing information for the message, by the IP-SM-GW upon receiving the message, and routing the message according to the routing information obtained.

According to an embodiment of the invention, an IP-based message routing system, includes: an indication information module arranged in an HSS/HLR; a message forwarding module arranged in a message routing entity; and a message routing module arranged in an IP-SM-GW.

The message routing entity is adapted to receive a message sent from a terminal and send a routing query request to a called-side HSS/HLR.

The indication information module is adapted to forward, to the message routing entity, information indicating to forward a message to the IP-SM-GW of a called subscriber, upon receiving the routing query request sent by the message routing entity, and to return the routing information for the message to the IP-SM-GW upon receiving the routing query request transferred from the message routing module,

The message forwarding module is adapted to forward the message received by the message routing entity to the IP-SM-GW of the called subscriber according to the indication information received by the message routing entity.

The message routing module is adapted to send a routing query request to the called-side HSS/HLR after the IP-SM-GW receives the message forwarded by the message forwarding module, and to route the message according to the routing information obtained.

According to an embodiment of the invention, an HSS/HLR is provided. The HSS/HLR at called side receives a routing query request that is transferred from a message routing entity, and an indication information module is provided in the HSS/HLR.

The indication information module is adapted to forward, to the message routing entity, information indicating to forward a message to the IP-SM-GW of called subscriber, after the HSS/HLR receives the routing query request sent by the message routing entity, and return the routing information for the message to the IP-SM-GW upon receiving the routing query request sent by the IP-SM-GW.

According to an embodiment of the invention, a message routing entity device is adapted to receive a message sent by a terminal and to send a routing query request to a called-side HSS/HLR, a message forwarding module being provided in the message routing entity;

the message forwarding module is adapted to forward, after the message routing entity device receives from the HSS/HLR the information indicating to forward the message to the IP-SM-GW of a called subscriber and according to the indication information received by the message routing entity, the message received by the message routing entity to the IP-SM-GW of the called subscriber, and the IP-SM-GW of the called subscriber routes the message to the called subscriber.

According to an embodiment of the invention, an IP-SM-GW is provided, a message routing module being provided in the IP-SM-GW;

the message routing module is adapted to send a routing query request to a called-side HSS/HLR after the IP-SM-GW receives a message forwarded by the message routing entity, and to route the message according to the routing information returned by the HSS/HLR.

It can be seen from the description of the above technical solutions that: in the embodiments of the invention, the traditional message routing entity only needs to forward a message received to the IP-SM-GW, and the subsequent routing processing on the message is implemented by the IP-SM-GW. In this way, in the embodiments of the invention, IP-based message routing can be implemented in a case where the traditional message routing entity is not capable of processing a plurality of (e.g., three) addresses, and no modification is performed on the traditional message routing entity, so that the interworking between IMS-based message service and the traditional short message service can be implemented without the need to upgrade the traditional message routing entity, and therefore the investment cost of the operator is reduced, and the cost for implementing the interworking between an IMS-based message service and the traditional short message service can be lowered.

### Brief Description of the Drawings

Figure 1 is a schematic diagram of network structure for interworking between an IMS-based message service and the traditional short message service in the prior art; and

Figure 2 is a flow chart of the SMS-MT process of a UE in the IMS network domain according to an embodiment of the invention.

### Detailed Description of the Embodiments

In the embodiments of the invention, the called-side HLR/HSS returns the information indicating to forward a message to the IP-SM-GW of a called subscriber to traditional message routing entities such as a short message routing entity SMS-GMSC and a multimedia short message routing entity MMS Relay, so that the traditional message routing entities may forward a received short message to an IP-SM-GW, which implements the functions of message routing query and message storing and forwarding. In this way, the process for receiving and processing the addresses of a plurality of network entities via a traditional message routing entity may be avoided in the embodiments of the invention, so that modifications and upgrade of the traditional message routing entity for implementing the interworking between the IMS-based message service and the traditional short message service may be effectively avoided. As a result, in the embodiments of the invention, the interworking between the IMS-based message service and the traditional message service can be realized in a low cost.

In the technical solutions according to the embodiments of the invention, the IP-SM-GW has the capability of receiving a message sent by a traditional message routing entity, of storing and forwarding the message and of subsequently trying other paths according to the message sending result; moreover, the IP-SM-GW has the capability of querying message routing information from the HLR/HSS. The IP-SM-GW may be further provided with a function of Network Domain Selection (NeDS). In other words, operator's policy and user's preference may be set in the IP-SM-GW. Thus, for a message-terminated process, the IP-SM-GW can decide to send a message to a subscriber via a certain path according to the operator's policy and user's preference information it stores therein and the routing information obtained through query. The NeDS function may also be arranged in the HSS/HLR, and therefore when the IP-SM-GW queries the message routing information from the HSS/HLR, the HSS/HLR may send the routing information, together with priority information of the message sending path decided via the NeDS function, to the IP-SM-GW.

It can be seen from the above description that the HLR/HSS needs to perform different processing according to different initiators of a routing query request. For example, when the HLR/HSS determines that the network entity which requests the message routing information is a traditional message routing entity, the HLR/HSS may directly return the information indicating to forward the message to the IP-SM-GW of a called subscriber to the traditional message routing entity. The indication information may be, for example, an address of the IP-SM-GW of the called subscriber; the HLR/HSS may also forward the routing query request to the IP-SM-GW, which returns a routing query response message carrying the address of the IP-SM-GW to the traditional message routing entity. In another example, when the HLR/HSS determines that the network entity which requests the message routing information is an IP-SM-GW, the HLR/HSS needs to return, according to the information currently registered by the called subscriber, i.e. according to the registration states of the called subscriber in the IMS domain, the CS domain and the PS domain, any one or more of the addresses including the address of the S-CSCF, the address of the MSC and the address of the SGSN that are registered by the subscriber terminal, to the IP-SM-GW. The HLR/HSS may also return only the International Mobile Subscriber Identity (IMSI) of the called subscriber to the IP-SM-GW; the HLR/HSS may also return the IMS1 of the called subscriber and any number of the above addresses registered by the subscriber terminal to the IP-SM-GW.

The specific process for implementing IP-based message routing according to an embodiment of the invention is as follows.

Firstly, a traditional message routing entity initiates a routing query request to an HLR/HSS, for requesting the HLR/HSS to provide routing information for the message service, and the routing query request sent by the traditional message routing entity carries the ID information of the called subscriber. When determining that the network entity sending the routing query request message is a traditional message routing entity, the HLR/HSS directly returns the address of the IP-SM-GW of the called subscriber to the traditional message routing entity, or the HLR/HSS directly forwards the routing query request message to the IP-SM-GW, which returns a routing query response message carrying the address information of the IP-SM-GW to the traditional message routing entity.

Here, the address of the IP-SM-GW of the called subscriber may be statically configured in the HLR/HSS according to the subscriber ID information, or registered with the HLR/HSS via a third party registration process in IMS domain when the subscriber registers with the IMS domain. Thus, the HLR/HSS may index the address of the IP-SM-GW corresponding to the subscriber according to the ID information of the subscriber in the routing query request.

The IP-SM-GW returns the routing query response message carrying address information of the IP-SM-GW to the traditional message routing entity. The routing query response message may be directly returned to the traditional message routing entity by the IP-SM-GW; or the routing query response message may be returned to HLR/HSS by the IP-SM-GW, and then returned to the traditional message routing entity by the HLR/HSS.

The traditional message routing entity forwards the message to the IP-SM-GW according to the address of the IP-SM-GW in the routing query response message returned by the HLR/HSS or the IP-SM-GW, and the IP-SM-GW stores the message it receives.

Then, the IP-SM-GW initiates a routing query request to the HLR/HSS, for requesting the HLR/HSS to provide the routing information for the message service, where the routing query request sent by the IP-SM-GW carries the ID information of the called subscriber. After the HLR/HSS determines that the network entity sending the routing query request message is an IP-SM-GW, the HLR/HSS returns any one or more of the IMSI, an address of the S-CSCF, an address of the MSC and an address of the SGSN with respect to a subscriber terminal, to the IP-SM-GW, according to the current registration information of the subscriber, i.e. according to the registration states of the subscriber with the IMS domain, the CS domain and the PS domain.

Here, the IP-SM-GW may query the message routing information from the HLR/HSS by using the MAP protocol or the Diameter protocol. When the IP-SM-GW exchanges routing information with the HLR/HSS by using the MAP protocol, the transfer of the routing information may be implemented with two exchange modes as follows:

Mode 1: The message MAP-SEND-ROUTING-INFO-FOR-SM in the existing MAP protocol is modified; for example, address information is added to a MAP-SEND-ROUTING-INFO-FOR-SM response. In this way, the HLR/HSS may return the addresses of three or more network entities to the IP-SM-GW together via the modified message; or the HLR/HSS may return the IMSI and the addresses of a plurality of network entities to the IP-SM-GW together, i.e. to return the address of the MSC, the address of the SGSN, the address of the S-CSCF and the IMSI, etc, to the IP-SM-GW.

Mode 2 The existing message MAP-SEND-ROUTING-INFO-FOR-SM is used, in other words, the message is not modified. At this point, as specified by the existing protocol, the HLR/HSS can return to the IP-SM-GW the address information of at most two network devices with which the called subscriber is registered. In this case, the HLR/HSS may return the addresses of two network entities corresponding to message sending paths with higher priority to the IP-SM-GW according to configuration information, or return the IMSI and the address of one network entity corresponding to a message sending path with higher priority When a subsequent message sending fails, the IP-SM-GW may be caused to query again the routing information from the HLR/HSS to obtain the address information of other network devices with which the called subscriber is registered, and the IMSI that is not returned. For example, the IP-SM-GW requests the address information of the last one network device with which the called subscriber terminal is registered, wherein the address information of the last network entity may be the address information of the network entity corresponding to the message sending path with the lowest priority.

When the IP-SM-GW queries the message routing information from the HLR/HSS by using the Diameter protocol, an interaction message used to query the routing information needs to be added additionally on the basis of the existing Diameter protocol, so that the IP-SM-GW may obtain the address information of a plurality of network entities and the IMSI from the HSS.

After receiving one or more of the IMSI and the addresses of the S-CSCF, the MSC and the SGSN returned by the HLR/HSS, the IP-SM-GW performs the NeDS function; in other words, according to the stored operator's policy and user's preference, the IP-SM-GW makes a decision on the above received IMSI and address information of the network devices with which the called subscriber is registered, thereby determining the priority of message sending paths. The IP-SM-GW selects a message sending path with the highest priority according to the decided priority order to send a message. For example, if the IP-SM-GW decides that the priority order of the message sending paths is IMSI, SGSN, MSC, then the IP-SM-GW converts the IMSI of the called subscriber into a TEL-URI format, and obtains the called subscriber ID in a SIP-URL format according to the called subscriber ID of the TEL-URL format, and further sends the message to the S-CSCF by using the SIP MESSAGE format.

After sending the message and receiving a delivery report of successful message sending, the IP-SM-GW deletes its stored message information, and forwards to the traditional message routing entity the delivery report of successful message sending.

After sending the message and receiving a delivery report of message sending failure, the IP-SM-GW can perform the subsequent processing according to the received delivery report of message sending failure; in other words, when a message fails to be sent via a certain sending path, the IP-SM-GW should try to send the message according to the priority order of the other sending paths. For example, after receiving a delivery report of message sending failure returned by the S-CSCF, the IP-SM-GW re-sends the message to the SGSN according to the priority order of the message sending paths. In another example, after receiving a delivery report of message sending failure returned by the SGSN, the IP-SM-GW continues to send the message to the MSC according to the priority order of the message sending paths. If the IP-SM-GW still fails in sending the message after trying all the sending paths, the IP-SM-GW deletes its stored message, and forwards a delivery report of message sending failure to the traditional message routing entity.

When receiving a delivery report of message sending failure, the above IP-SM-GW may also determine the subsequent process according to the failure cause carried in the delivery report. For example, when the message failure is caused by a Memory Capacity Exceeded Flag (MCEF), the IP-SM-GW may not try sending via other paths any more. At this point, the IP-SM-GW may directly delete the message it stores, and forwards a delivery report of message sending failure to the traditional message routing entity.

In the description of the above embodiment, the NeDS function may also be implemented by an HLR/HSS; in other words, the operator's policy and user's preference information may be arranged in the HLR/HSS. After receiving a message routing information query request from the IP-SM-GW, the HLR/HSS may obtain any one or more of the IMSI, the address of the S-CSCF, the address of the MSC and the address of the SGSN with respect to the subscriber terminal, according to the current registration information of the subscriber, i.e. according to the registration states of the subscriber in the IMS domain, the CS domain and the PS domain. Then, the HLR/HSS performs the NeDS function; in other words, according to the operator's policy and user's preference, the HLR/HSS performs a priority based ordering with respect to the address information of the network devices with which the called subscriber is registered and the IMSI, and then returns a list with the priority order to the IP-SM-GW. In the subsequent process, when receiving a routing query response message returned by the HLR/HSS, the IP-SM-GW selects a message sending path with the highest priority according to the priority order carried in the routing query response message and sends the message. The process after the IP-SM-GW sends the message and receives a delivery report of successful message sending/ a delivery report of message sending failure is basically the same as that described in the above embodiment, so it will not be described in detail herein.

It can be seen from the description of the above embodiment that in the technical solutions according to the embodiments of the invention, the IP-SM-GW plays a role in the called-side network which is similar to a message, routing entity and a message storing and forwarding entity in the traditional network. The IP-SM-GW may query the message routing information, and stores and forwards a message. In the embodiments of the invention, by directly forwarding the message to the IP-SM-GW in the called-side network, the interworking between a message service between the IMS network domain and that in the traditional network can be implemented without modifying the network entity of the traditional message service in the calling-side network, i.e. the traditional message routing entity,

In the technical solutions according to the embodiments of the invention, the IP-SM-GW may further filter the message stored therein, thereby preventing the sending of junk messages, fraudulent messages and virus messages, etc. In this case, the IP-SM-GW only performs routing query and message forwarding and processing on the filtered non-junk messages, non-fraudulent messages and so on.

In the embodiments of the invention, a charging function may also be added at the IP-SM-GW side. For example, when receiving a delivery report of successful message sending returned by the called subscriber, the IP-SM-GW may charge the calling subscriber on the message sent. In another example, when receiving a delivery report of successful message sending returned by the called subscriber, the IP-SM-GW may charge the called subscriber on the message received, so that the charging function on the called-side message reception can be implemented.

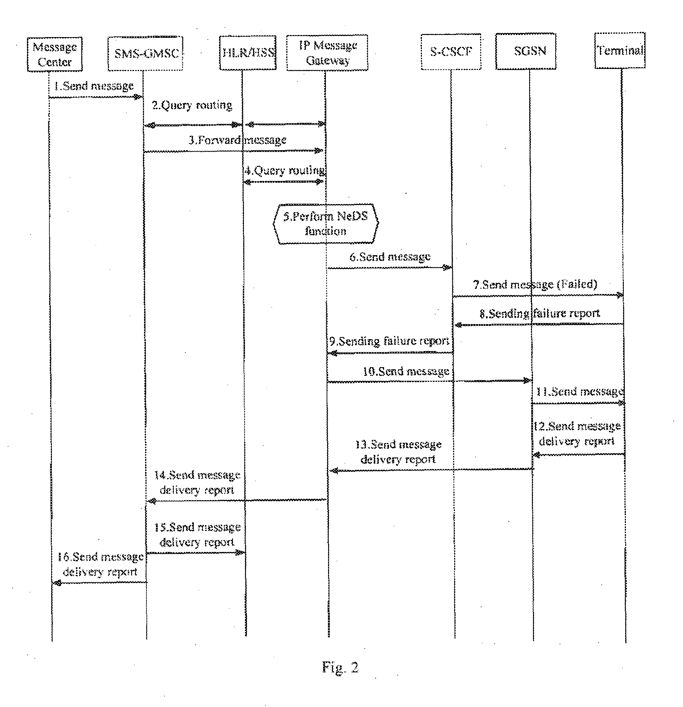

Hereinafter, the IP-based message routing method according to an embodiment of the invention will be described in detail in connection with Figure 2.

At step 1, a message center forwards a short message to an SMS-GMSC.

At step 2, the SMS-GMSC sends a routing query request to an HLR/HSS to obtain routing information for the message. The routing query request message carries ID information of the called subscriber. After determining that the network entity requesting the short message routing information is the SMS-GMSC, the HLR/HSS returns the address of the IP-SM-GW of the called subscriber terminal to the SMS-GMSC. The address of the IP-SM-GW of the called subscriber terminal may be statically configured in the HLR/HSS according to the subscriber ID, or registered with the HLR/HSS via an IMS third party registration process when the subscriber registers with the IMS domain. The HLR/HSS indexes the address of the IP-SM-GW corresponding to the subscriber according to the ID information of the called subscriber in the routing query request.

After determining that the network entity requesting the short message routing information is the SMS-GMSC, the HLR/HSS may also directly forward the routing query request message to the IP-SM-GW, which directly returns a routing query response message carrying the address information of the IP-SM-GW to the SMS-GMSC. The IP-SM-GW may also sends the routing query response message to the HLR/HSS, which then sends the routing query response message to the SMS-GMSC.

At step 3, after obtaining the address of the IP-SM-GW, the SMS-GMSC sends a short message carrying the MSISDN of the called subscriber terminal to the IP-SM-GW, which receives and stores the short message sent by the SMS-GMSC.

At step 4, the IP-SM-GW sends a routing query request to the HLR/HSS to obtain the routing information for its received message. The routing query request message carries the ID information of the called subscriber. After determining that the network entity requesting the short message routing information is the IP-SM-GW, the HLR/HSS returns any one or more of the IMSI, the address of the S-CSCF, the address of the MSC and the address of the SGSN with respect to the subscriber terminal to the IP-SM-GW, according to the current registration information of the subscriber, i.e. the registration states of the subscriber with the IMS domain, the CS domain and the PS domain. In this step, the routing query request message sent to the HLR/HSS by the IP-SM-GW is a message MAP-SEND-ROUTING-INFO-FOR-SM that is modified. In this way, the Get-Routing-Information-Response message returned to the IP-SM-GW by the HLR/HSS may carry an amount of information, such as the address of the MSC, the address of the SGSN and the IMSI.

At step 5, after receiving the information returned by the HLR/HSS, the IP-SM-GW performs the NeDS function; in other words, the IP-SM-GW performs a decision on the received address list according to the operator's policy and user's preference stored therein, to determine, the priority order of the message sending paths. For example, the IP-SM-GW decides that the priority order of the message sending path is IMSI, SGSN, MSC.

At step 6, after determining the priority of the message sending paths, the IP-SM-GW selects a message sending path with the highest priority according to the decided priority order of the message sending paths and sends a message. If the IP-SM-GW decides that the priority order of the message sending paths is IMSI, SGSN, MSC, the IP-SM-GW converts the IMSI of the called subscriber into the TEL-URI format, and obtains the called subscriber ID in the SIP-URL format according to the called subscriber ID in the TEL-URL format, and then sends a message to the S-CSCF by using the SIP MESSAGE format.

At step 7, after receiving the message sent by the IP-SM-GW, the S-CSCF forwards the message to the called subscriber terminal in an SIP MESSAGE. Assume that the message sending fails this time.

At step 8, the called subscriber terminal sends a delivery report of message sending failure to the S-CSCF by using SIP MESSAGE.

At step 9, the S-CSCF sends a delivery report of message sending failure to the IP-SM-GW using SIP MESSAGE.

At step 10, the IP-SM-GW analyzes the delivery report of message sending failure it receives. When determining that the failure cause is the MCEF, the IP-SM-GW directly sends a delivery report of short message sending failure to the SMS-GMSC, with the corresponding failure cause of MCEF carried, and then deletes the short message it stores. Further, the SMS-GMSC sends a delivery report of short message sending failure to the HLR/HSS and the short message center, with the corresponding failure cause of MCEF carried, and the current message sending process ends. When determining that the failure cause is not the MCEF, the IP-SM-GW sends the message to the SGSN via a sending path with the second highest priority according to the priority order of the message sending paths that is decided at step 5.

At step 11, after receiving the message sent by the IP-SM-GW, the SGSN forwards the short message to the called subscriber terminal. Assume that the message is sent successfully this time.

At step 12, the called subscriber terminal sends a delivery report of successful short message sending to the SGSN.

At step 13, the SGSN sends the delivery report of successful short message sending to the IP-SM-GW, and the IP-SM-GW deletes the short message it stores.

At step 14, the IP-SM-GW sends the delivery report of successful short message sending to the SMS-GMSC.

At step 15, the SMS-GMSC sends the delivery report of successful short message sending to the HLR/HSS.

At step 16, the SMS-GMSC sends the delivery report of successful short message sending to the short message center, and the current message sending process ends.

The IP-based message routing system according to an embodiment of the invention, the HSS/HLR, the traditional message routing entity and the IP-SM-GW will now be described in detail.

The IP-based message routing system according to the embodiment of the invention mainly includes: an indication information module arranged in an HSS/HLR; a message forwarding module arranged in a traditional message routing entity; and a message routing module arranged in an IP-SM-GW.

The indication information module is mainly adapted to determine the sender of a routing query request after the HSS/HLR receives the routing query request. When determining that the routing query request received by the HSS/HLR is sent by the traditional message routing entity, the indication information module may forward the routing query request to the IP-SM-GW of the called subscriber, and forward the routing query response message carrying the address information of the IP-SM-GW returned by the message routing module of the IP-SM-GW to the traditional message routing entity. The message routing module in the IP-SM-GW may also directly return the routing query response message to the traditional message routing entity; the indication information module in the HSS/HLR may also directly return to the traditional message routing entity the information indicating to forward the message to the IP-SM-GW of a called subscriber, for example, the indication information module returns the address information of the IP-SM-GW of the called subscriber to the traditional message routing entity. When determining that the routing query request received by the HSS/HLR is sent by the IP-SM-GW, the indication information module returns to the IP-SM-GW the routing information for the message, such as the address information of the network devices with which the called subscriber is registered and the IMSI. Here, the indication information module may return to the IP-SM-GW the address information of all the network devices with which the called subscriber is registered and the IMSI in one go; the indication information module may also return the address information of part of the network devices with which the called subscriber is registered to the IP-SM-GW, or return the address information of part of the network devices with which the called subscriber is registered and the IMSI to the IP-SM-GW, and the indication information module may further returns the address information of other network devices with which the called subscriber is registered and the IMSI that is not returned to the IP-SM-GW when the IP-SM-GW performs routing query with respect to the message again. Moreover, when the indication information module returns the address information to the IP-SM-GW, it may also return priority information of each network device, and the indication information module may determine the priority information of each network device through the NeDS function, as is specifically described in the method above.

The message forwarding module is mainly adapted to directly forward the message received by the traditional message routing entity to the IP-SM-GW of the called subscriber according to the indication information, such as the address information of the IP-SM-GW of the called subscriber, which is received by the traditional message routing entity.

The message routing module is mainly adapted to store a message forwarded by the traditional message routing entity after the message is received by the IP-SM-GW, and to request the routing information for the message from the HSS/HLR. When receiving the message routing information sent by the HSS/HLR, the message routing module performs routing processing on the message that is received and stored by the IP-SM-GW. Here, the message routing module may exchange routing information with the HSS/HLR via the existing MAP protocol and Diameter protocol, etc.; moreover, the routing information exchange may be implemented via a mode where address information is extended or a mode where a new routing query request message is added, as is specifically described in the method above.

The main function of the above message routing module may be implemented via a storage sub-module, a routing query sub-module, a message routing sub-module, a filtration sub-module and a charging sub-module.

The storage sub-module is adapted to store the messages received by the IP-SM-GW and forwarded from the message forwarding module.

The filtration sub-module is adapted to filter a message received by the IP-SM-GW, and instruct the routing query sub-module to query the routing information for the filtered message. The filtration sub-module may filter a message before the storage sub-module stores message, so that a junk message and a virus message, etc., will not be stored; the filtration sub-module may also filter a message after the storage sub-module stores the message, and then delete the junk messages and virus messages stored in the storage sub-module according to the filtering result.

The routing query sub-module is mainly adapted to send a routing query request carrying the ID information of the called subscriber to the HSS/HLR, after the IP-SM-GW receives a message forwarded from the message forwarding module and receives the routing information query notification from the filtration sub-module.

Here, the routing query sub-module may obtain the message routing information from the HSS/HLR by using a non-extended message MAP-SEND-ROUTING-INFO-FOR-SM that is specified in the existing protocol, or a message MAP-SEND-ROUTING-INFO-FOR-SM with extended address information. The message routing information may also be obtained from the HSS/HLR by using a routing query request message that is newly provided, as is specifically described in the method above.

The message routing sub-module is mainly adapted to route, when the IP-SM-GW receives the address information of network devices with which the called subscriber is registered and/or the IMSI which are returned by the HSS/HLR. a message according to the priority of message sending paths, and the address information of the various network devices and the IMSI which are received. Here, the priority information may be sent by the HSS/HLR together with the address information of network devices with which the called subscriber is registered, or determined by the message routing sub-module through performing the NeDS function.

The message routing sub-module implements the message routing as follows. The message routing sub-module selects a message sending path with the highest priority according to the priority order and sends a message, if the priority order of the message sending paths is IMSI, SGSN, MSC, the message routing sub-module sends the message to the S-CSCF. After sending the message and receiving a delivery report of successful message sending returned by the called subscriber terminal, the message routing sub-module deletes the message stored in the storage sub-module, and forwards the delivery report of successful message sending to the traditional message routing entity. After sending the message and receiving a delivery report of message sending failure returned by the called subscriber terminal, the message routing sub-module will try to send the message according to the priority order of the other sending paths; for example, after receiving a delivery report of message sending failure returned by the S-CSCF, the message routing sub-module proceeds to send the message to the SGSN according to the priority order of the message sending paths; in another example, after receiving a delivery report of message sending failure returned by the SGSN, the message routing sub-module proceeds to send the message to the MSC according to the priority order of the message sending paths. If the message routing sub-module still fails in sending the message after trying all the sending paths, the IP-SM-GW deletes the message stored in the storage sub-module and forwards a delivery report of message sending failure to the traditional message routing entity.

When receiving the delivery report of message sending failure, the message routing sub-module may also determine the subsequent process according to the failure cause carried in the delivery report of message sending failure. For example, if the message failure is caused by the MCEF, the message routing sub-module may not try sending via the other paths any more. At this point, the message routing sub-module may directly delete the message stored in the storage sub-module, and forward a delivery report of message sending failure to the traditional message routing entity.

When the address information of the network devices with which the called subscriber is registered, which is returned by the indication information module to the message routing sub-module for the first time with respect to a message is the address information of part of the network devices, or when no IMSI is returned, if all the attempts to forward the message performed by the message routing sub-module fail, the message routing sub-module may notify the routing query sub-module to proceed to query the address information of the other network devices with which the called subscriber is registered and the IMSI which are corresponding to the message, from the indication information module, so that the message routing sub-module may proceed to route the message according to the information that is received again. When the message routing sub-module fails in routing the message according to the address information of all the network devices with which the called subscriber is registered and the IMSI, message routing sub-module forwards a delivery report of message sending failure to the traditional message routing entity, as is specifically described in the method above.

The charging sub-module is mainly adapted to charge the calling subscriber on the message sent when the message routing sub-module receives a delivery report of successful message sending returned by the called subscriber terminal, and the charging sub-module may also charge the called subscriber on the message received.

The foregoing descriptions are merely illustrative of the embodiments of the invention. It is apparent to those skilled in the art that various modifications and variations may be made without departing from the scope of the invention as defined by the appended claims and their equivalents. And all the modifications and variations are intended to be within the scope of the invention.

## Claims

1. An IP-based message routing method, comprising:
receiving, by a Home Subscriber Server/Home Location Register, HSS/HLR on a called side, a routing query request transferred from a Short Message Service Gateway Mobile Switching Center, SMS-GMSC; **characterized by**:
forwarding, by the HSS/HLR, the routing query request message to an IP-Short Message-Gateway, IP-SM-GW after determining that the network entity requesting the short message routing information is the SMS-GMSC, wherein the IP-SM-GW returns a routing query response message carrying the address information of the IP-SM-GW to the SMS-GMSC.

2. The method of claim 1, **characterized in that** the indication information is address information of the IP-SM-GW of the called subscriber, and the forwarding to a message routing entity, by a called-side HSS/HLR, information indicating to forward a message to an IP-SM-GW of a called subscriber comprises:
forwarding, by the HSS/HLR, the routing query request to the IP-SM-GW of the called subscriber, after the HSS/HLR determines that the routing query request received is sent by the message routing entity, and sending, by the IP-SM-GW, the address information of the IP-SM-GW, to the message routing entity.

3. The method of claim 1, **characterized in that** the requesting the HSS/HLR for routing information for the message, by the IP-SM-GW upon receiving the message, and routing the message according to the routing information obtained, comprises:
receiving and storing the message, by the IP-SM-GW, and sending to the HSS/HLR a routing query request carrying ID information of the called subscriber;
returning, by the HSS/HLR, to the IP-SM-GW an IMSI of the called subscriber and/or address information of network devices with which the called subscriber is registered, according to the ID information of the called subscriber, after the HSS/HLR determines that the routing query request received is sent by the IP-SM-GW; and
routing, by the IP-SM-GW, the message according to priority of message sending paths and information returned by the HSS/HLR.

4. The method of claim 3, **characterized in that** the priority of the message sending paths is determined by the IP-SM-GW through performing a Network Domain Selection (NeDS) function (5), or the priority of the message sending paths is transferred to the IP-SM-GW by the HSS/HLR.

5. The method of claim 3, **characterized in that** the IP-SM-GW sends the routing query request carrying the ID information of the called subscriber to the HSS/HLR via MAP protocol or Diameter protocol.

6. The method of claim 5, **characterized in that**:
the HSS/HLR returns to the IP-SM-GW the IMSI of the called subscriber and/or the address information of the network devices with which the called subscriber is registered, via a Get-Routing-Information-Response message of the MAP protocol or via a Get-Routing-Information-Response message with extended address information; or
the HSS/HLR returns to the IP-SM-GW the IMSI of the called subscriber and/or the address information of the network devices with which the called subscriber is registered, via a routing query response message in the Diameter protocol.

7. The method of claim 3, 4, 5 or 6, **characterized in that** the HSS/HLR returning to the IP-SM-GW the address information of the network devices with which the called subscriber is registered comprises:
returning to the IP-SM-GW, by the HSS/HLR, the address information of all or part of the network devices with which the called subscriber is registered.

8. The method of claim 7, **characterized in that** when the HSS/HLR returns to the IP-SM-GW the address information of part of the network devices with which the called subscriber is registered, the IP-SM-GW routing the message comprises:
routing, by the IP-SM-GW, the message received, according to the priority of the message sending paths and the information returned by the HSS/HLR;
forwarding, by the IP-SM-GW, a delivery report of a message to a message center via the message routing entity when the message is sent successfully, and
proceeding, when the IP-SM-GW fails in routing the message according to the address information of each of the part of the network devices, by the IP-SM-GW, to request the HSS/HLR for the address information of the other part of the network devices with which the called subscriber is registered, and routing the message according to address information received again;
or,
when the HSS/HLR returns to the IP-SM-GW the address information of all the network devices with which the called subscriber is registered, the IP-SM-GW routing the message comprises:
routing, by the IP-SM-GW, the message received, according to a priority of the message sending paths and the information returned by the HSS/HLR;
deleting, by the IP-SM-GW, the message stored in the IP-SM-GW, when the message is sent successfully, and forwarding a delivery report of successful message sending to the message center via the message routing entity; and
deleting, by the IP-SM-GW, the message stored in the IP-SM-GW, when the IP-SM-GW fails in routing the message according to all the information returned from the HSS/HLR, and forwarding a delivery report of message sending failure to the message center via the message routing entity.

9. The method of claim 3, 4, 5 or 6, **characterized in that** the IP-SM-GW routing the message comprises:
during a process in which the IP-SM-GW routes the message according to the priority of the message sending paths and the information returned from the HSS/HLR, deleting, by the IP-SM-GW, the message stored in the IP-SM-GW, and forwarding a delivery report of message sending failure to the message center via the message routing entity (14,16), when the IP-SM-GW receives a delivery report of message sending failure returned by the terminal and determines that the message no longer needs to be routed according to the information returned by the HSS/HLR according to a failure cause in the delivery report .

10. An IP-based message routing system, comprising:
a Home Subscriber Server/Home Location Register, HSS/HLR on a called side, adapted to receive a routing query request transferred from a Short Message Service Gateway Mobile Switching Center, SMS-GMSC, **characterized by** the HSS/HLR on the called side adapted to: forward the routing query request message to an IP-Short Message-Gateway, IP-SM-GW after determining that the network entity requesting the short message routing information is the SMS-GMSC, wherein the IP-SM-GW is adapted to return a routing query response message carrying the address information of the IP-SM-GW to the SMS-GMSC; and
an IP-SM-GW, adapted to receive the routing query request forwarded by the HSS/HLR; return a routing query response message carrying the address information of the IP-SM-GW to he SMS-GMSC.

## Patentansprüche

1. IP-basiertes Verfahren zur Nachrichtenlenkung, umfassend:
Empfangen, durch einen Heimat-Teilnehmer-Server/Heimatregister, HSS/HLR, an einer angerufenen Seite, einer Lenkungsabfrage-Anforderung, übertragen von einer Kurznachrichtendienst-Gateway-Mobilvermittlungsstelle, SMS-GMSC; **gekennzeichnet durch**:
Weiterleiten, **durch** den HSS/HLR, der Lenkungsabfrage-Anforderungsnachricht zu einem IP-Kurznachrichten-Gateway, IP-SM-GW, nach Bestimmung, dass die Netzwerkinstanz, die die Kurznachrichten-Lenkungsinformationen anfordert, die SMS-GMSC ist, wobei das IP-SM-GW eine Lenkungsabfrage-Antwortnachricht, die die Adressinformationen des IP-SM-GW trägt, zu der SMS-GMSC zurücksendet.

2. Verfahren nach Anspruch 1, **dadurch gekennzeichnet, dass** die Angabe-Informationen Adressinformationen des IP-SM-GW des angerufenen Teilnehmers sind und das Weiterleiten zu einer Nachrichtenlenkungsinstanz, durch einen HSS/HLR der angerufenen Seite, von Informationen, die angeben, eine Nachricht zu einem IP-SM-GW eines angerufenen Teilnehmers weiterzuleiten, Folgendes umfasst: Weiterleiten, durch den HSS/HLR, der Lenkungsabfrage-Anforderung zu dem IP-SM-GW des angerufenen Teilnehmers, nachdem der HSS/HLR bestimmt, dass die empfangene Lenkungsabfrage-Anforderung von der Nachrichtenlenkungsinstanz gesandt wurde, und Senden, durch das IP-SM-GW, der Adressinformationen des IP-SM-GW zu der Nachrichtenlenkungsinstanz.

3. Verfahren nach Anspruch 1, **dadurch gekennzeichnet, dass** das Anfordern, von dem HSS/HLR, von Lenkungsinformationen für die Nachricht durch das IP-SM-GW nach Empfangen der Nachricht und das Lenken der Nachricht gemäß den erhaltenen Lenkungsinformationen Folgendes umfassen:
Empfangen und Speichern der Nachricht durch das IP-SM-GW und Senden einer Lenkungsabfrage-Anforderung, die ID-Informationen des angerufenen Teilnehmers trägt, zu dem HSS/HLR;
Zurücksenden, durch den HSS/HLR, einer IMSI des angerufenen Teilnehmers und/oder von Adressinformationen von Netzwerkvorrichtungen, bei denen der angerufene Teilnehmer gemäß den ID-Informationen des angerufenen Teilnehmers registriert ist, zu dem IP-SM-GW, nachdem der HSS/HLR bestimmt, dass die empfangene Lenkungsabfrage-Anforderung von dem IP-SM-GW gesandt wurde; und Lenken, durch das IP-SM-GW, der Nachricht gemäß Priorität von Nachrichtensendewegen und Informationen, die von dem HSS/HLR zurückgesandt wurden.

4. Verfahren nach Anspruch 3, **dadurch gekennzeichnet, dass** die Priorität der Nachrichtensendewege von dem IP-SM-GW durch Ausführen einer Netzwerkdomänenwahl-Funktion, NeDS-Funktion (5), bestimmt wird oder die Priorität der Nachrichtensendewege durch den HSS/HLR zu dem IP-SM-GW transferiert wird.

5. Verfahren nach Anspruch 3, **dadurch gekennzeichnet, dass** das IP-SM-GW die Lenkungsabfrage-Anforderung, die die ID-Informationen des angerufenen Teilnehmers trägt, über MAP-Protokoll oder Diameter-Protokoll zu dem HSS/HLR sendet.

6. Verfahren nach Anspruch 5, **dadurch gekennzeichnet, dass**:
der HSS/HLR die IMSI des angerufenen Teilnehmers und/oder die Adressinformationen der Netzwerkvorrichtungen, bei denen der angerufene Teilnehmer registriert ist, über eine "Get-Routing-Information-Response"-Nachricht des MAP-Protokolls oder über eine "Get-Routing-Information-Response"-Nachricht mit erweiterten Adressinformationen zu dem IP-SM-GW zurücksendet; oder
der HSS/HLR die IMSI des angerufenen Teilnehmers und/oder die Adressinformationen der Netzwerkvorrichtungen, bei denen der angerufene Teilnehmer registriert ist, über eine Lenkungsabfrage-Antwortnachricht in dem Diameter-Protokoll zu dem IP-SM-GW zurücksendet.

7. Verfahren nach Anspruch 3, 4, 5 oder 6, **dadurch gekennzeichnet, dass** Zurücksenden zu dem IP-SM-GW, durch den HSS/HLR, der Adressinformationen der Netzwerkvorrichtungen, bei denen der angerufene Teilnehmer registriert ist, Folgendes umfasst:
Zurücksenden zu dem IP-SM-GW, durch den HSS/HLR, der Adressinformationen sämtlicher oder eines Teils der Netzwerkvorrichtungen, bei denen der angerufene Teilnehmer registriert ist.

8. Verfahren nach Anspruch 7, **dadurch gekennzeichnet, dass**, wenn der HSS/HLR die Adressinformationen eines Teils der Netzwerkvorrichtungen, bei denen der angerufene Teilnehmer registriert ist, zu dem IP-SM-GW zurücksendet, das Lenken der Nachricht durch das IP-SM-GW Folgendes umfasst:
Lenken, durch das IP-SM-GW, der empfangenen Nachricht gemäß der Priorität der Nachrichtensendewege und der von dem HSS/HLR zurückgesandten Informationen;
Weiterleiten, durch das IP-SM-GW, eines Zustellungsberichts einer Nachricht zu einem Nachrichtenzentrum über die Nachrichtenlenkungsinstanz, wenn die Nachricht erfolgreich gesandt wurde, und
Fortfahren, wenn das IP-SM-GW beim Lenken der Nachricht gemäß den Adressinformationen von jeder des Teils der Netzwerkvorrichtungen versagt, durch das IP-SM-GW, zum Anfordern der Adressinformationen des anderen Teils der Netzwerkvorrichtungen, bei denen der angerufene Teilnehmer registriert ist, von dem HSS/HLR und Lenken der Nachricht gemäß erneut empfangener Adressinformationen;
oder,
wenn der HSS/HLR die Adressinformationen sämtlicher Netzwerkvorrichtungen, bei denen der angerufene Teilnehmer registriert ist, zu dem IP-SM-GW zurücksendet, das Lenken der Nachricht durch das IP-SM-GW Folgendes umfasst:
Lenken, durch das IP-SM-GW, der empfangenen Nachricht gemäß einer Priorität der Nachrichtensendewege und der von dem HSS/HLR zurückgesandten Informationen;
Löschen, durch das IP-SM-GW, der in dem IP-SM-GW gespeicherten Nachricht, wenn die Nachricht erfolgreich gesandt wurde, und Weiterleiten eines Zustellungsberichts des erfolgreichen Sendens der Nachricht zu dem Nachrichtenzentrum über die Nachrichtenlenkungsinstanz; und
Löschen, durch das IP-SM-GW, der in dem IP-SM-GW gespeicherten Nachricht, wenn das IP-SM-GW beim Lenken der Nachricht gemäß sämtlichen von dem HSS/HLR zurückgesandten Informationen versagt, und Weiterleiten eines Zustellungsberichts des fehlgeschlagenen Sendens der Nachricht zu dem Nachrichtenzentrum über die Nachrichtenlenkungsinstanz.

9. Verfahren nach Anspruch 3, 4, 5 oder 6, **dadurch gekennzeichnet, dass** das Lenken der Nachricht durch das IP-SM-GW Folgendes umfasst:
während eines Prozesses, in dem das IP-SM-GW die Nachricht gemäß der Priorität der Nachrichtensendewege und der von dem HSS/HLR zurückgesandten Informationen lenkt, Löschen, durch das IP-SM-GW, der in dem IP-SM-GW gespeicherten Nachricht und Weiterleiten eines Zustellungsberichts des fehlgeschlagenen Sendens der Nachricht zu dem Nachrichtenzentrum über die Nachrichtenlenkungsinstanz (14, 16), wenn das IP-SM-GW einen Zustellungsbericht des fehlgeschlagenen Sendens der Nachricht, der von dem Endgerät zurückgesandt wurde, empfängt und gemäß einer Fehlerursache in dem Zustellungsbericht bestimmt, dass die Nachricht nicht mehr gemäß den von dem HSS/HLR zurückgesandten Informationen gelenkt werden muss.

10. IP-basiertes System für Nachrichtenlenkung, umfassend:
einen Heimat-Teilnehmer-Server/Heimatregister, HSS/HLR, an einer angerufenen Seite, ausgelegt zum Empfangen einer Lenkungsabfrage-Anforderung, übertragen von einer Kurznachrichtendienst-Gateway-Mobilvermittlungsstelle, SMS-GMSC, **dadurch gekennzeichnet, dass** der HSS/HLR an der angerufenen Seite ausgelegt ist zum: Weiterleiten der Lenkungsabfrage-Anforderungsnachricht zu einem IP-Kurznachrichten-Gateway, IP-SM-GW, nach Bestimmung, dass die Netzwerkinstanz, die die Kurznachrichten-Lenkungsinformationen anfordert, die SMS-GMSC ist, wobei das IP-SM-GW ausgelegt ist zum Zurücksenden einer Lenkungsabfrage-Anforderungsnachricht, die die Adressinformationen des IP-SM-GW trägt, zu der SMS-GMSC; und
ein IP-SM-GW, ausgelegt zum Empfangen der von dem HSS/HLR weitergeleiteten Lenkungsabfrage-Anforderung; Zurücksenden einer Lenkungsabfrage-Antwortnachricht, die die Adressinformationen des IP-SM-GW trägt, zu der SMS-GMSC.

## Revendications

1. Procédé d'acheminement de messages basé sur IP, comprenant les étapes suivantes :
recevoir, par un serveur des abonnés nominaux/enregistreur de localisation nominal, HSS/HLR d'un côté appelé, une requête de demande d'acheminement transférée à partir d'un centre de commutation mobile de passerelle de service de messagerie texto, SMS-GMSC ; **caractérisé par** :
transmettre, par le HSS/HLR, le message de requête de demande d'acheminement à une passerelle de messagerie texto IP, IP-SM-GW après avoir déterminé que l'entité réseau demandant les informations d'acheminement de messages courts est le SMS-GMSC, l'IP-SM-GW retournant un message de réponse à la demande d'acheminement contenant les informations d'adresse de l'IP-SM-GW au SMS-GMSC.

2. Procédé selon la revendication 1, **caractérisé en ce que** les informations d'indication sont des informations d'adresse de l'IP-SM-GW de l'abonné appelé, et **en ce que** l'étape consistant à transmettre à une entité d'acheminement de messages, par un HSS/HLR côté appelé, des informations indiquant de transmettre un message à un IP-SM-GW d'un abonné appelé comprend :
transmettre, par le HSS/HLR, la requête de demande d'acheminement à l'IP-SM-GW de l'abonné appelé, après que le HSS/HLR a déterminé que la requête de demande d'acheminement reçue a été envoyée par l'entité d'acheminement de messages, et envoyer, par l'IP-SM-GW, les informations d'adresse de l'IP-SM-GW, à l'entité d'acheminement de messages.

3. Procédé selon la revendication 1, **caractérisé en ce que** l'étape consistant à demander au HSS/HLR les informations de routage pour le message, par l'IP-SM-GW lors de la réception du message, et l'étape consistant à acheminer le message selon les informations d'acheminement obtenues, comprennent :
recevoir et stocker le message, par l'IP-SM-GW, et envoyer au HSS/HLR une requête de demande d'acheminement contenant les informations d'identification de l'abonné appelé ;
retourner, par l'HSS/HLR, à l'IP-SM-GW un IMSI de l'abonné appelé et/ou les informations d'adresse des dispositifs réseau auprès desquels l'abonné appelé est enregistré, selon les informations d'identification de l'abonné appelé, après que le HSS/HLR a déterminé que la requête de demande d'acheminement reçue a été envoyée par l'IP-SM-GW ; et
acheminer, par l'IP-SM-GW, le message selon la priorité des chemins d'envoi de messages et les informations retournées par le HSS/HLR.

4. Procédé selon la revendication 3, **caractérisé en ce que** la priorité des chemins d'envoi de messages est déterminée par l'IP-SM-GW en exécutant une fonction de sélection de domaine réseau (NeDS) (5), ou la priorité des chemins d'envoi de messages est transférée à l'IP-SM-GW par le HSS/HLR.

5. Procédé selon la revendication 3, **caractérisé en ce que** l'IP-SM-GW envoie la requête de demande d'acheminement contenant les informations d'identification de l'abonné appelé au HSS/HLR par l'intermédiaire du protocole MAP ou du protocole Diameter.

6. Procédé selon la revendication 5, **caractérisé en ce que** :
le HSS/HLR retourne à l'IP-SM-GW l'IMSI de l'abonné appelé et/ou les informations d'adresse des dispositifs réseau auprès desquels l'abonné appelé est enregistré, par l'intermédiaire d'un message Obtenir une réponse contenant les informations d'acheminement du protocole MAP ou par l'intermédiaire d'un message Obtenir une réponse contenant les informations d'acheminement avec des informations d'adresse étendues ; ou
le HSS/HLR retourne à l'IP-SM-GW l'IMSI de l'abonné appelé et/ou les informations d'adresse des dispositifs réseau auprès desquels l'abonné appelé est enregistré, par l'intermédiaire d'un message de réponse à la demande d'acheminement dans le protocole Diameter.

7. Procédé selon la revendication 3, 4, 5 ou 6, **caractérisé en ce que** le HSS/HLR retournant à l'IP-SM-GW les informations d'adresse des dispositifs réseau auprès desquels l'abonné appelé est enregistré comprend l'étape suivante :
retourner à l'IP-SM-GW, par le HSS/HLR, les informations d'adresse de la totalité ou d'une partie des dispositifs réseau auprès desquels l'abonné appelé est enregistré.

8. Procédé selon la revendication 7 **caractérisé en ce que**, lorsque le HSS/HLR retourne à l'IP-SM-GW les informations d'adresse d'une partie des dispositifs réseau auprès desquels l'abonné appelé est enregistré, l'étape consistant à acheminer le message par l'IP-SM-GW comprend :
acheminer, par l'IP-SM-GW, le message reçu, selon la priorité des chemins d'envoi de messages et les informations retournées par le HSS/HLR ;
transmettre, par l'IP-SM-GW, un rapport de livraison d'un message à un centre de messages par l'intermédiaire de l'entité d'acheminement de messages lorsque le message a été envoyé avec succès, et
lorsque l'IP-SM-GW ne réussit pas à acheminer le message selon les informations d'adresse de chaque dispositif réseau de la partie des dispositifs réseau, poursuivre en demandant, par l'IP-SM-GW, au HSS/HLR les informations d'adresse de l'autre partie des dispositifs réseau auprès desquels l'abonné appelé est enregistré, et
acheminer à nouveau le message selon les informations d'adresse reçues ;
ou,
lorsque le HSS/HLR retourne à l'IP-SM-GW les informations d'adresse de la totalité des dispositifs réseau auprès desquels l'abonné appelé est enregistré, l'étape consistant à acheminer le message par l'IP-SM-GW comprend :
acheminer, par l'IP-SM-GW, le message reçu, selon une priorité des chemins d'envoi de messages et les informations retournées par le HSS/HLR ;
supprimer, par l'IP-SM-GW, le message stocké dans l'IP-SM-GW, lorsque le message est envoyé avec succès, et transmettre un rapport de livraison du succès de l'envoi de message au centre de messages par l'intermédiaire de l'entité d'acheminement de messages ; et
supprimer, par l'IP-SM-GW, le message stocké dans l'IP-SM-GW, lorsque l'IP-SM-GW ne réussit pas à acheminer le message selon la totalité des informations retournées à partir du HSS/HLR, et transmettre un rapport de livraison de l'échec d'envoi de message au centre de messages par l'intermédiaire de l'entité d'acheminement de messages.

9. Procédé selon la revendication 3, 4, 5 ou 6, **caractérisé en ce que** l'étape consistant à acheminer le message par l'IP-SM-GW comprend :
durant un processus dans lequel l'IP-SM-GW achemine le message selon la priorité des chemins d'envoi de messages et les informations retournées à partir du HSS/HLR, supprimer, par l'IP-SM-GW, le message stocké dans l'IP-SM-GW, et transmettre un rapport de livraison d'échec d'envoi de messages au centre de messages par l'intermédiaire de l'entité d'acheminement de messages (14, 16), lorsque l'IP-SM-GW reçoit un rapport de livraison d'échec d'envoi de messages retourné par le terminal et détermine que le message n'a plus besoin d'être acheminé selon les informations retournées par le HSS/HLR selon une cause d'échec dans le rapport de livraison.

10. Système d'acheminement de messages basé sur IP, comprenant:
un serveur des abonnés nominaux/enregistreur de localisation nominal, HSS/HLR d'un côté appelé, conçu pour recevoir une requête de demande d'acheminement transférée à partir d'un centre de commutation mobile de passerelle de service de messagerie texto, SMS-GMSC, **caractérisé par le fait que** le HSS/HLR du côté appelé est conçu pour : transmettre le message de requête de demande d'acheminement à une passerelle de messagerie texto IP, IP-SM-GW après avoir déterminé que l'entité réseau demandant les informations d'acheminement de messages courts est le SMS-GMSC, l'IP-SM-GW étant conçu pour retourner un message de réponse à la demande d'acheminement contenant les informations d'adresse de l'IP-SM-GW au SMS-GMSC ; et
un IP-SM-GW, conçu pour recevoir la requête de demande d'acheminement transmise par le HSS/HLR ; retourner un message de réponse à la demande d'acheminement contenant les informations d'adresse de l'IP-SM-GW au SMS-GMSC.
